# EUROPÄISCHE PATENTSCHRIFT

(11) **EP 1 083 413 B1**
(45) Veröffentlichungstag und Bekanntmachung des Hinweises auf die Patenterteilung: **23.04.2003**
(21) Anmeldenummer: 99117604.1
(22) Anmeldetag: 07.09.1999
(51) Int. Cl.: G01F 23/284

(54) **Vorrichtung zur Bestimmung des Füllstands eines Füllguts in einem Behälter**
Device for measuring the level of a product in a container
Dispositif de mesure du niveau d'un produit dans un réservoir

(43) Veröffentlichungstag der Anmeldung: 14.03.2001
(73) Patentinhaber: Endress + Hauser GmbH + Co.KG., 79689 Maulburg (DE)
(72) Erfinder: Müller, Roland, 79585 Steinen (DE); Malzahn, Thomas, 79539 Lörrach (DE); Hauptvogel, Karl-Peter, 68870 Bartenheim (FR); Birgel, Dietmar, 79650 Schopfheim (DE)
(74) Vertreter: Andres, Angelika

(56) Entgegenhaltungen:
- DE-A- 19 800 306
- US-A- 4 369 447
- US-A- 5 402 136
- US-A- 5 561 435
- US-A- 5 689 265
- US-A- 5 818 391
- PATENT ABSTRACTS OF JAPAN vol. 1995, no. 11, 26. Dezember 1995 (1995-12-26) & JP 07 212124 A (FUJITSU GENERAL LTD), 11. August 1995 (1995-08-11)

## Beschreibung

Die Erfindung bezieht sich auf eine Vorrichtung zur Bestimmung des Füllstandes eines Füllguts in einem Behälter, bestehend aus einer Signalerzeugungseinheit, die Meßsignale erzeugt, einer Einkoppeleinheit und einer Antenne mit einem Antennengehäuse, wobei die Einkoppeleinheit die Meßsignale auf die Antenne einkoppelt und wobei die Antenne die Meßsignale in Richtung der Oberfläche des Füllguts aussendet, und einer Empfangs-/Auswerteschaltung, welche die an der Oberfläche des Füllguts reflektierten Meßsignale empfängt und über die Laufzeit der Meßsignale den Füllstand in dem Behälter bestimmt. Desweiteren bezieht sich die Erfindung auf ein Verfahren zur Befestigung einer Einkoppeleinheit an einer Antenne, wobei die Antenne in der erfindungsgemäßen Vorrichtung verwendbar ist.

Zur Abstrahlung eines bevorzugten Wellenmodes werden bevorzugt Planarantennen eingesetzt. Eine in Verbindung mit der erfindungsgemäßen Vorrichtung verwendbare Planarantenne ist in dem Buch 'Einführung in die Theorie und Technik planarer Mikrowellenantennen in Mikrostreifenleitungstechnik', Gregor Gronau, Verlagsbuchhandlung Nellissen-Wolff oder in dem Zeitschriftehartikel 'Impedance of a radiating slot in the ground plane of a microstrip line', IEEE Trans. Antennas Propagat., vol. AP-30, 922 - 926, Mai 1982 beschrieben.
Eine Planarantenne besteht beispielsweise aus einem dielektrischen Substrat, auf dessen einer Seite die Antennenstruktur und auf dessen anderer Seite eine leitfähige Beschichtung vorgesehen ist. In der leitfähigen Beschichtung. sind Ausnehmungen derart angeordnet, daß die Antenne nur elektromagnetische Wellen des gewünschten Modes abstrahlt.

US-A-5 818 391 offenbart eine Antennenanordnung, bei der eine Einkoppeleinheit mit zwischen zwei dielektrischen schichten liegenden leitfähigen Elementen verbunden ist.

Besondere Schutzmaßnahmen sind zu treffen, wenn das Füllstandsmeßgerät in einem explosionsgefährdeten Bereich eingesetzt wird. Hier muß unbedingt dafür Sorge getragen werden, daß sich Überspannungen nicht durch das explosive Medium hindurch auf eine benachbarte, auf Massepotential liegende Fläche entladen können. So darf insbesondere kein Entladungsfunke von der Antenne auf den Flansch, mit dem das Füllstandsmeßgerät an dem Behälter befestigt ist, überspringen. Überspannungen auf der Antenne werden beispielsweise durch einen Blitzeinschlag verursacht.

Eine bekannte Schutzmaßnahme sieht vor, daß eine Überspannung, bevor sie auf dem Füllstandsmeßgerät auftritt, von einer Zusatz-Vorrichtung, einem sog. Blitzschutz, abgefangen wird. Diese Lösung ist natürlich relativ teuer. Bekannt geworden ist es darüber hinaus, einen Überspannungsschutz auf elektronische Art und Weise zu realisieren.

Der Erfindung liegt die Aufgabe zugrunde, einen kostengünstigen Überspannungsschutz hoher Güte für eine Planarantenne sowie ein Verfahren zum Befestigen einer Einkoppeleinheit an einer derartigen Antenne vorzuschlagen.

Die Aufgabe wird durch eine Vorrichtung gemäß Anspruch 1 bzw. ein Verfahren gemäß Anspruch 15 gelöst. Die Ausnehmungen, die in der leitfähigen Beschichtung vorgesehen sind, sind vorzugsweise schlitzförmig ausgebildet. Bei der Aussparung in der ersten dielektrischen Schicht kann es sich auch um eine (mehrere) Durchkontaktierung(en) oder um eine (mehrere) Ausnehmung(en) handeln.

Gemäß einer vorteilhaften Weiterbildung der erfindungsgemäßen Vorrichtung sind die Kontaktierungen in Sacklochbohrungen angeordnet sind. Durch die Verwendung von Sacklochbohrungen, in die die Kontaktierungen eingebracht sind oder werden, wird eine sehr sichere, dauerhafte Verbindung und damit eine hohe mechanische Stabilität zwischen der Einkoppeleinheit und der Planarantenne erreicht.

. Gemäß einer ersten Ausgestaltung der erfindungsgemäßen Vorrichtung weisen die Sacklochbohrungen eine leitfähige Innenbeschichtung auf. Diese Ausgestaltung ermöglicht es, als Einkoppeleinheit einen Hochfrequenzstecker, beispielsweise einen SMA-Stecker, zu verwenden. Gemäß einer Ausgestaltung der erfindungsgemäßen Vorrichtung weist der Hochfrequenzstecker mehrere Masse-Kontaktstifte und zumindest einen im wesentlichen mittig angeordneter Kontaktstift für den Innenleiter auf. Üblicherweise sind vier Kontaktstifte vorgesehen, die -im Querschnitt gesehen- an den Ecken eines Quadrats angeordnet sind, wobei sich der Kontaktstift für den Innenleiter im Zentrum des Quadrats befindet. Die kontaktstifte des Hochfrequenzsteckers werden in die Sacklochbohrungen mit der leitfähiger Innenbeschichtung eingeführt, wodurch eine elektrische Verbindung mit der leitfähigen Beschichtung hergestellt wird; der Kontaktstift für den Innenleiter wird leitend mit der. Antennenstruktur verbunden. Bevorzugt wird zum dauerhaften elektrischen Verbinden von Einkoppeleinheit und Antennenstruktur bzw. leitfähiger Beschichtung das Reflow-Verfahren verwendet.
Eine bevorzugten Weiterbildung der erfindungsgemäßen Vorrichtung sieht übrigens vor, daß der Kontaktstift für den Innenleiter der Einkoppeleinheit, insbesondere des Hochfrequenzsteckers (SMA-Stecker), zumindest um die Schichtdicke der ersten dielektrischen Schicht kürzer ist als die Masse-Kontaktstifte.

Weiterhin schlägt eine vorteilhafte Weiterbildung der erfindungsgemäßen Vorrichtung vor, daß die leitfähige Beschichtung durch Kontakt mit dem Antennengehäuse und/oder dem Verbindungsflansch auf Massepotential liegt.

Vor dem Innenleiter, über den die Meßsignale von der Signalerzeugungseinheit auf die Antenne eingespeist werden, ist somit die auf Massepotential liegende leitfähige Beschichtung mit den vorzugsweise schlitzförmigen Ausnehmungen vorgesehen. Beim Auftreten einer Überspannung auf der Antenne, erfolgt die Entladung daher von der Antennenstruktur auf die leitfähige Beschichtung, die auf Massepotential liegt. Die Entladungsstrecke befindet sich somit vollständig innerhalb der Antenne, und der Entladungsfunke kommt nicht in Kontakt mit dem Gasgemisch des explosionsgefährdeten Bereichs.

Um die Ableitung der Überspannung von der leitfähigen Beschichtung redundant zu gestalten, sind die Kontaktierungen vorgesehen. Da die Kontaktierungen die vor der leitfähigen Beschichtung liegende dielektrische Schutzschicht nicht durchstoßen, entfallen auch die sonst üblichen außerhalb der Schutzschicht liegenden Lötstellen, die chemisch relativ unbeständig sind und daher prinzipiell durch eine weitere Schutzschicht abgedeckt sein müssen.
Da weiterhin der Innenleiter die auf Masse liegende leitfähige Beschichtung nicht durchstößt, kann kein Entladungsfunken in den explosionsgefährdeten Bereich durchschlagen: die Kontaktierungen, das Antennengehäuse und die leitfähige Beschichtung bilden einen Faraday Käfig.

Um eine optimale Impedanzanpassung zwischen der Einkoppeleinheit und der Antenne zu erreichen, ist die Aussparung in der ersten dielektrischen Schicht, in der die Einkoppeleinheit angeordnet ist, zumindest teilweise mit einem dielektrischen Material aufgefüllt. Dieses dielektrische Material ist so gewählt, daß der Impedanzsprung, der üblicherweise bei Übergang von einem Medium in ein anderes auftritt, minimiert wird.

Eine vorteilhafte Weiterbildung der erfindungsgemäßen Vorrichtung sieht eine dielektrische Schutzschicht vor, die mit der zweiten dielektrischen Schicht derart verbunden ist, daß die leitfähige Beschichtung zwischen den beiden dielektrischen Schichten angeordnet ist. Wie der Name schon sagt, schützt die Schicht die darunterliegende leitfähige Beschichtung gegen Verschmutzung und Korrosion. Die Dicke der Schutzschicht wird vorzugsweise so gewählt, daß Diffusionsfestigkeit gegeben ist.
Vorzugsweise sind die dielektrischen Schichten, insbesondere die Schutzschicht, aus Teflon gefertigt. So ist es möglich; die Teflonschicht z. B. mittels optischen Laserschweißens unmittelbar mit der zweiten dielektrischen Schicht zu verbinden. Eine zusätzliche Klebeschicht erübrigt sich. Die dielektrischen Schichten, insbesondere die erste und zweite dielektrische Schicht, können übrigens aus einem Teflon-Keramik-Verbund oder einem Teflon-Keramik-Glasfaser-Verund bestehen.

Gemäß einer vorteilhaften Weiterbildung der erfindungsgemäßen Vorrichtung ist ein trichterförmiger Adapter vorgesehen, der die Antenne mit einem zweiten Wellenleiter, insbesondere einem Schwallrohr, verbindet. Entweder ist der Adapter aus einem leitfähigen Material gefertigt ist, oder er hat zumindest eine Innenbeschichtung aus einem leitfähigen Material. Es hat sich herausgestellt, daß ein optimaler Anpassungseffekt auch erreicht werden kann, wenn der Adapter aus einem nicht-leitfähigen Material gefertigt ist.

Eine bevorzugte Ausführungsform schlägt vor, daß der Adapter derart ausgestaltet ist, daß er eine Antenne mit vorgegebener Dimensionierung an den zweiten Wellenleiter mit vorgegebener Dimensionierung anpaßt, wobei die Dimensionierung der Antenne vorzugsweise kleiner ist als die Dimensionierung des zweiten Wellenleiters. Hierdurch wird es möglich, eine Standard-Antenne mit einem vorgegebenen Durchmesser an beliebig dimensionierte Schwallrohre anzupassen. Durch den Einsatz des Adapters wird der bevorzugte Ausbreitungsmode, der von der Antenne erzeugt wird, stetig auf den Durchmesser des Schwallrohrs aufgeweitet. Sprünge treten nicht auf.

Um die Ausbreitung unerwünschter Moden zu unterdrücken, sind gemäß einer Weiterbildung der erfindungsgemäßen Vorrichtung zumindest in einem Bereich der Mantelfläche des Adapters, der an die Antenne angrenzt, Ausnehmungen vorgesehen sind, die im wesentlichen parallel zur Ausbreitungsrichtung der Wandströme des TE01-Modes der Meßsignale liegen. Während die. Wandströme des TE01-Modes sich problemlos um die Ausnehmungen herumbewegen, werden senkrecht gerichtete Wandströme und damit die entsprechenden Moden unterdrückt. Bevorzugt sind die Ausnehmungen schlitzförmig ausgebildet, sie können prinzipiell aber jede beliebige Form aufweisen. So lassen sich befriedigende Ergebnisse auch mit beliebig geformten Ausnehmungen erreichen.

Gemäß einer bevorzugten Ausgestaltung des erfindungsgemäßen Verfahrens werden die Kontaktstifte bzw. der Innenleiter mit der leitfähigen Schicht bzw. der Antennenstruktur über ein Reflow-Verfahren verbunden werden.

Zwecks Optimierung der Impedanzanpassung zwischen Einkoppeleinheit und Antenne wird die Aussparung, in der ersten dielektrischen Schicht, in der die Einkoppeleinheit plaziert ist, mit einem dielektrischen Material aufgefüllt.

Die Erfindung wird anhand der nachfolgenden Zeichnungen näher erläutert. Es zeigt:
Fig. 1: eine schematische Darstellung der erfindungsgemäßen Vorrichtung,
Fig. 2: eine Explosionsdarstellung der einzelnen Schichten, aus denen sich die Antenne gemäß einer bevorzugten Ausgestaltung zusammensetzt,
Fig. 3: einen Schnitt durch eine bevorzugte Ausgestaltung der erfindungsgemäßen Einkoppeleinheit mit Antenne,
Fig. 3a: eine weitere Darstellung der in Fig. 3 gezeigten Einkoppeleinheit und
Fig. 3b: eine alternative Ausgestaltung zu der in Fig. 3a gezeigten elektrischen Kontaktierung,
Fig. 3c: eine Darstellung der Antenne mit Einkoppeleinheit, montiert an einem Behälter, und
Fig. 4: eine schematische Darstellung eines Adapters gemäß einer bevorzugten Ausgestaltung der erfindungsgemäßen Vorrichtung.

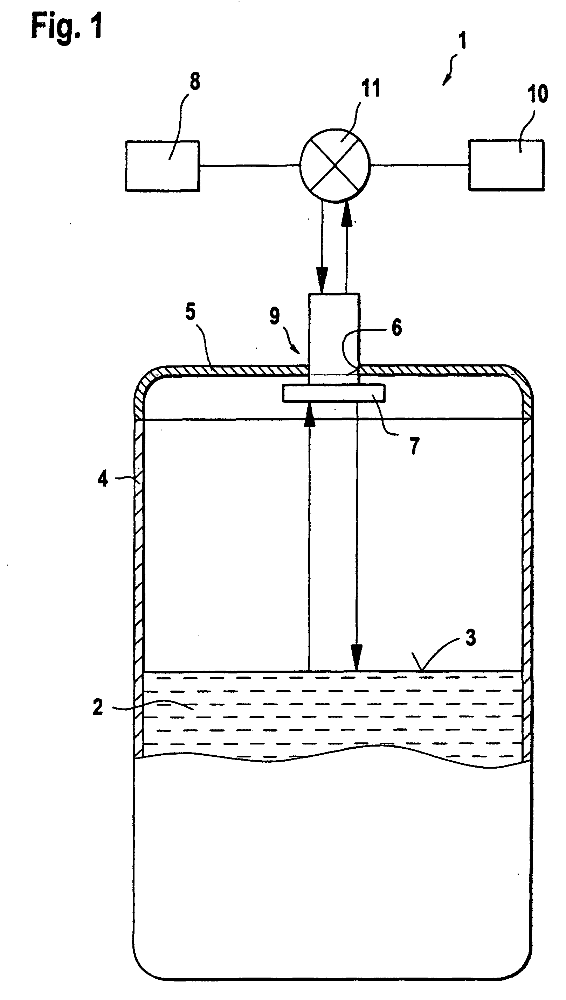

Fig. 1 zeigt eine schematische Darstellung einer Ausgestaltung der erfindungsgemäßen Vorrichtung. Ein Füllgut 2 ist in einem Behälter 4 gelagert. Zur Bestimmung des Füllstandes dient das Füllstandsmeßgerät 1, das in einer Öffnung 6 im Deckel 5 des Behälters 4 montiert ist. Über die Antenne 7 werden in der Signalerzeugungseinheit 8 erzeugte Meßsignale, insbesondere Mikrowellen, in Richtung der Oberfläche 3 des Füllguts 2 abgestrahlt. An der Oberfläche 3 werden die Meßsignale als Echosignale teilweise reflektiert. Diese Echosignale werden in der Empfangs-/Auswerteeinheit 10 empfangen und mittels eines Laufzeitverfahrens ausgewertet. Die korrekte Taktung von Absendung der Meßsignale und Empfang der Echosignale erfolgt über die Sende-Empfangsweiche 11.

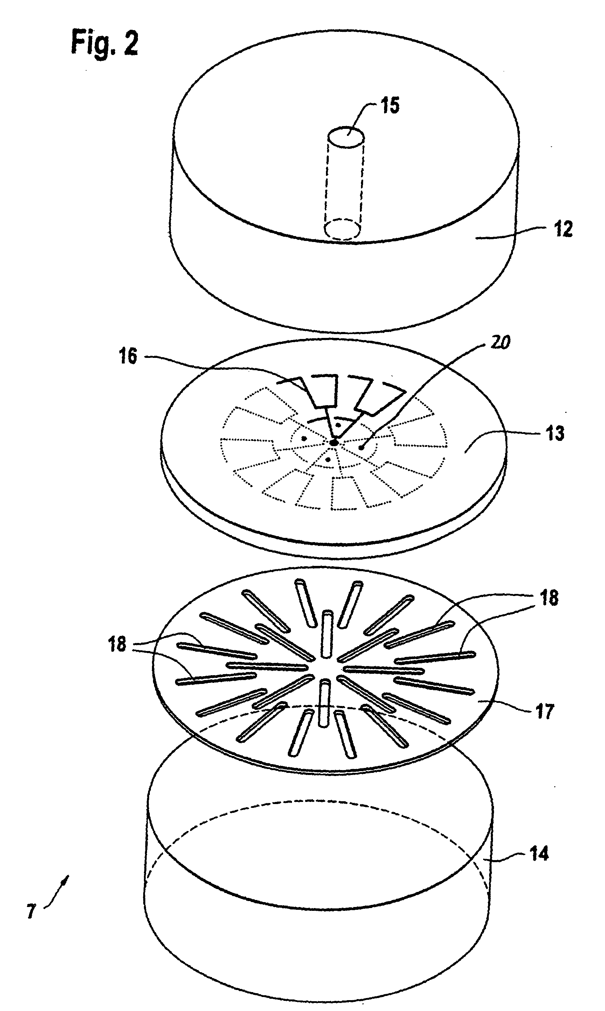

Fig. 2 zeigt eine Explosionsdarstellung der einzelnen Schichten, aus denen sich die Antenne 7 gemäß einer bevorzugten Ausgestaltung zusammensetzt. Die Antenne 7 besteht aus einer ersten dielektrischen Schicht 12, einer zweiten dielektrischen Schicht 13 und einer gleichfalls dielektrischen Schutzschicht 14. In der ersten dielektrischen Schicht 12 ist mittig eine Aussparung 15 zur Aufnahme der in der Fig. 2 nicht gesondert dargestellten Einkoppeleinheit 9 vorgesehen. Auf der der ersten dielektrischen Schicht 12 zugewandten Seite trägt die zweite dielektrische Schicht 13 eine Antennenstruktur 16, die nur ausschnittsweise dargestellt ist. Auf der der Schutzschicht 14 zugewandten Seite ist die zweite dielektrische Schicht 13 mit einer leitfähigen Beschichtung 17 versehen. Die leitfähige Beschichtung 17 weist radial angeordnete schlitzförmige Ausnehmungen 18 auf, die den bevorzugten Ausbreitungsmode aus den Meßsignalen, die von der Signalerzeugungseinheit 8 geliefert werden, herausfiltem. Die einzelnen Schichten 12, 13, 14, aus denen sich die gezeigte Ausführungsform der erfindungsgemäßen Antenne 7 zusammensetzt, werden beispielsweise über eine Klebeverbindung zusammengehalten.

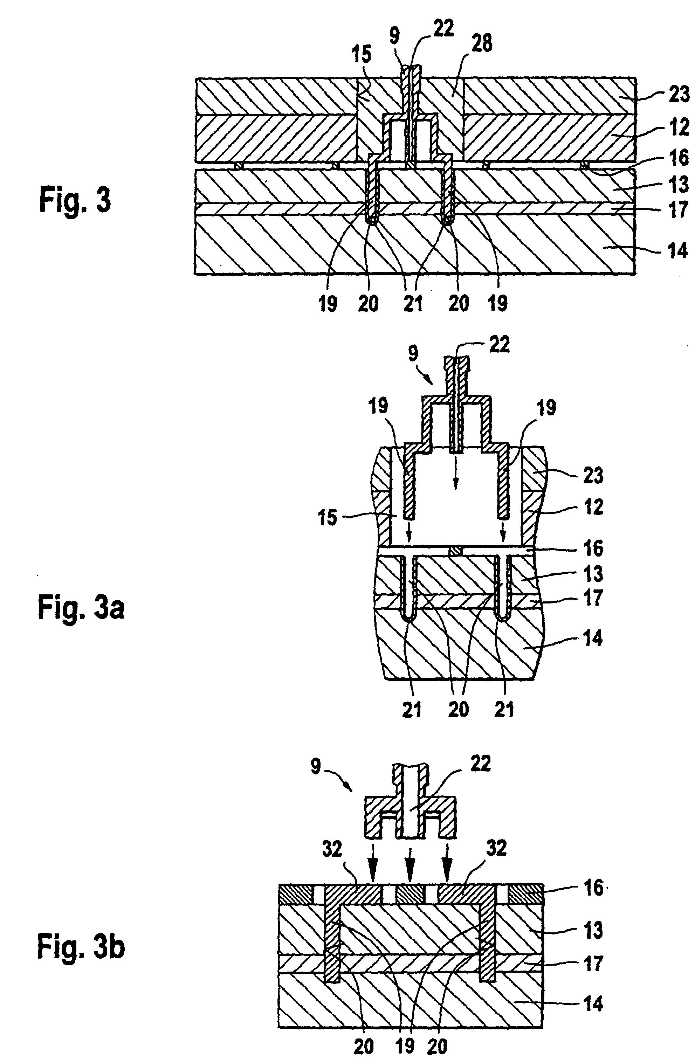

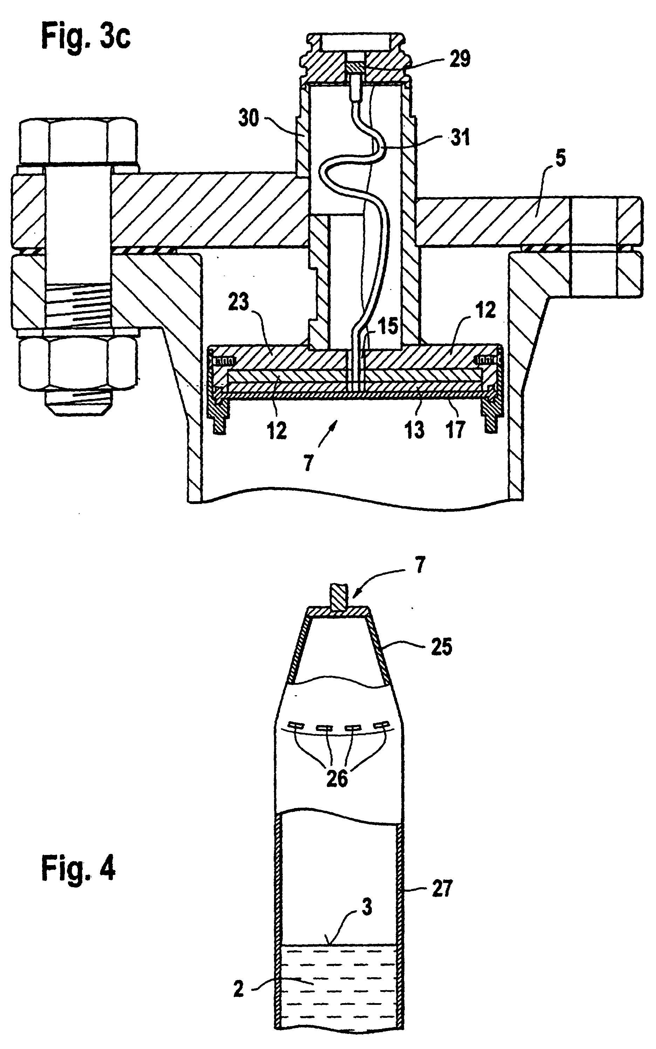

Fig. 3 zeigt einen Schnitt durch eine bevorzugte Ausgestaltung der erfindungsgemäßen Einkoppeleinheit 9, über die die Meßsignale auf die Antenne 7 eingespeist werden. Fig. 3a zeigt eine weitere Darstellung der in Fig. 3 gezeigten Einkoppeleinheit, logelöst von der Anntenne 7. Aus dem in Fig. 3c gezeigten Schnitt ist ersichtlich, daß die leitfähige Beschichtung 17 mit den schlitzförmigen Ausnehmungen 18 über den Flansch 23 und das Antennengehäuse 30 auf Massepotential liegt.

Wie im Falle der zuvor beschriebenen Ausführungsform von der Figur 3 setzt sich die Antenne 7 aus der ersten dielektrischen Schicht 12, der zweiten dielektrischen Schicht 13 und der Schutzschicht 14 zusammen. Die der ersten dielektrischen Schicht 12 zugewandte Seite der zweiten dielektrischen Schicht 13 trägt die Antennenstruktur 16; auf der entgegengesetzten Seite der zweiten dielektrischen Schicht 13 ist die leitfähige Beschichtung 17 mit den Ausnehmungen 18 angeordnet. Angedeutet ist auch der Flansch 21, über den die leitfähige Beschichtung 17 auf Massepotential liegt.
Tritt auf der Antennenstruktur 16 eine Überspannung auf; so erfolgt die Entladung durch die dielektrische Schicht 13 hindurch auf die leitfähige Beschichtung 17. Eine Entladung im oberen Abschnitt der Antenne 7 ist ausgeschlossen, da das die Meßsignale führende Koax-Kabel 31 von den leitfähigen Teilen des Antennengehäuses infolge der Glasdurchführung 29 elektrisch isoliert ist.

Bei der Einkoppeleinheit 9 handelt es sich im gezeigten Fall um einen Hochfrequenzstecker, vorzugsweise um einen SMA-Stecker. Der Kontaktstift für den Innenleiter 22 ist elektrisch mit der Antennenstruktur 16 kontaktiert, während die Masse-Kontaktstifte 19 - üblicherweise sind es vier Kontaktstifte 19 - in die Sacklochbohrungen 20 eingefügt sind. Die Sacklochbohrungen 20, die üblicherweise zumindest durch die zweite dielektrische Schicht 13 und die leitfähige Beschichtung 17 hindurchgehen und auf oder innerhalb der dielektrischen Schutzschicht 14 enden, sind mit einer leitfähigen Innenbeschichtung 21 versehen. Die Masse-Kontaktstifte 19 tragen dafür Sorge, daß die Ableitung der Überspannungen von der Antennenstruktur 16 redundant erfolgen kann. Die Verbindung der Kontaktstifte 19 mit der leitfähigen Beschichtung 17 und die Verbindung des Kontaktstiftes für den Innenleiter 22 mit der Antennenstruktur 16 erfolgt, wie bereits an vorhergehender Stelle erwähnt, bevorzugt über ein Reflow-Verfahren.

Fig. 3b zeigt übrigens eine zu dem in Fig. 3 bzw. Fig. 3a gezeigten Hochfrequenzstecker 9 alternative Ausgestaltung. In den Sacklochbohrungen 20 ist ein elektrisch leitendes Material (→ Kontaktierungen 19) angeordnet und über Leiterbahnen 32 mit den Kontaktstiften 19 verbunden. Die elektrische Kontaktierung, z. B. über das bereits zuvor erwähnte Reflow-Verfahren, erfolgt hier in unmittelbarer Nähe oder an der Oberfläche der zweiten dielektrischen Schicht 13 bzw. an der Oberfläche der Antennenstruktur 16.

Fig. 4 zeigt eine schematische Darstellung eines Adapters 25, der es ermöglicht, eine Standard-Antenne 7 einer vorgegebenen Größe an ein im Grunde genommen beliebig dimensioniertes Schwallrohr 27 anzupassen. Insbesondere läßt sich der bevorzugte Mode stetig auf jeden beliebigen Durchmesser des Schwallrohres 27 aufweiten.
Im Grenzbereich von Adapter 25 und Schwallrohr 27 sind in der Mantelfläche des Adapters 25 Ausnehmungen 26 vorgesehen. Im gezeigten Fall sind die Ausnehmungen schlitzförmig ausgestaltet. Prinzipiell können sie jedoch eine beliebige Form aufweisen. Während die Ausnehmungen 26 Moden unterdrücken, deren Wandströme senkrecht zur Ausbreitungsrichtung der Meßsignale orientiert sind, stören sie den bevorzugten TE01-Mode nicht. Dieser kann sich auch weiterhin uneingeschränkt ausbreiten, da sich die Wandströme um die Ausnehmungen 26 herumbewegen. Daher ermöglicht es der erfindungsgemäße Adapter 25, auch eine Antenne 7 einzusetzen, die .beliebige Moden erzeugt und abstrahlt.

### Bezugszeichenliste

- 1: erfindungsgemäße Vorrichtung
- 2: Füllgut
- 3: Oberfläche des Füllguts
- 4: Behälter
- 5: Deckel
- 6: Öffnung
- 7: Antenne
- 8: Signalerzeugungseinheit
- 9: Einkoppeleinheit
- 10: Empfangs-/Auswerteschaltung
- 11: Sende-/Empfangsweiche
- 12: erste dielektrische Schicht
- 13: zweite dielektrische Schicht
- 14: dielektrische Schutzschicht
- 15: Aussparung
- 16: Antennenstruktur
- 17: leitfähige Beschichtung
- 18: Ausnehmung
- 19: Kontaktierung/Masse-Kontaktstift
- 20: Sacklochbohrung
- 21: Innenbeschichtung
- 22: Innenleiter
- 23: Flansch
- 24: Verbindungsleitung/Koax-Kabel
- 25: Adapter
- 26: Ausnehmung in Adapter
- 27: zweiter Wellenleiter
- 28: dielektrisches Material
- 29: Glasdurchführung
- 30: Antennengehäuse
- 31: Koax-Kabel
- 32: Leiterbahn

## Patentansprüche

1. Vorrichtung zur Bestimmung des Füllstandes eines Füllguts (2) in einem Behälter (4), bestehend aus einer Signalerzeugungseinheit (8), die Meßsignale erzeugt, einer Einkoppeleinheit (9) und einer Antenne (7) mit einem Antennengehäuse (30), wobei die Einkoppeleinheit (9) die Meßsignale auf die Antenne (7) einkoppelt und wobei die Antenne (7) die Meßsignale in Richtung der Oberfläche des Füllguts (2) aussendet, und einer Empfangs/Auswerteschaltung (10), welche die an der Oberfläche (3) des Füllguts (2) reflektierten Meßsignale empfängt und über die Laufzeit der Meßsignale den Füllstand in dem Behälter (4) bestimmt,
wobei die Antenne (7) aus zumindest zwei dielektrischen Schichten (12, 13) besteht,
wobei die erste dielektrische Schicht (12) zumindest eine Aussparung (15) zur Aufnahme der Einkoppeleinheit (9) aufweist,
wobei die zweite dielektrische Schicht (13) auf der der ersten dielektrischen Schicht (12) zugewandten Seite eine Antennenstruktur (16) trägt und auf der der ersten dielektrischen Schicht (12) abgewandten Seite eine leitfähige Beschichtung (17) mit Ausnehmungen (18) aufweist,
wobei in der zweiten dielektrischen Schicht (13) Kontaktierungen (19) vorgesehen sind, die die Einkoppeleinheit (9) mit der leitfähigen Beschichtung (17) verbinden, und
wobei der durch die Kontaktierungen (19), die leitfähige Beschichtung (17) und das Antennengehäuse (30) definierte Raumbereich einen Faraday Käfig bildet.

2. Vorrichtung nach Anspruch 1,
wobei die Kontaktierungen (19) in Sacklochbohrungen (20) angeordnet sind.

3. Vorrichtung nach Anspruch 1 oder 2,
wobei die Sacklochbohrungen (20) eine leitfähige Innenbeschichtung (21) aufweisen.

4. Vorrichtung nach Anspruch 1 oder 2,
wobei die leitfähige Beschichtung (17) mit den Ausnehmungen (18) auf Massepotential liegt.

5. Vorrichtung nach Anspruch 1, 2, 3 oder 4,
wobei es sich bei der Einkoppeleinheit (9) um einen Hochfrequenz-Stecker (9a) handelt, der mehrere Kontaktstifte (19) und zumindest einen im wesentlichen mittig angeordneten Innenleiter (22) aufweist.

6. Vorrichtung nach Anspruch 1 oder 2,
wobei die Kontaktierungen (19) in den Sacklochbohrungen (20) angeordnet sind und
wobei die Einkoppeleinheit (9) über die Kontaktierungen (19) mit der leitfähigen Beschichtung (17) verbindbar ist.

7. Vorrichtung nach Anspruch 5 oder 6,
wobei der Innenleiter (22) zumindest um die Schichtdicke der ersten dielektrischen Schicht (12) kürzer ist als die Kontaktierungen bzw. die Kontaktstifte (19) und
wobei der Innenleiter (22) mit der Antennenstruktur (16) verbindbar ist.

8. Vorrichtung nach Anspruch 1, 5, 6 oder 7,
wobei die Aussparung (15) in der ersten dielektrischen Schicht (12), in der die Einkoppeleinheit (9) angeordnet ist, zumindest teilweise mit einem dielektrischen Material (28) aufgefüllt ist.

9. Vorrichtung nach Anspruch 1, 7 oder 8,
wobei eine dielektrische Schutzschicht (14) vorgesehen ist, die mit der zweiten dielektrischen Schicht (13) auf der Seite verbunden ist, auf der die leitfähige Beschichtung (17) angeordnet ist.

10. Vorrichtung nach Anspruch 1, 7, 8 oder 9,
wobei die dielektrischen Schichten (12, 13 14) aus Teflon gefertigt sind.

11. Vorrichtung nach Anspruch 1,
wobei ein trichterförmiger Adapter (25) vorgesehen ist, der die Antenne (7) mit einem zweiten Wellenleiter (27) verbindet.

12. Vorrichtung nach Anspruch 11,
wobei der Adapter (25) aus einem leitfähigen Material gefertigt ist oder
wobei der Adapter (25) zumindest eine Innenbeschichtung aus leitfähigem Material aufweist oder
wobei der Adapter (25) aus einem nicht-leitfähigen Material gefertigt ist.

13. Vorrichtung nach Anspruch 11 oder 12,
wobei der Adäpter (25) derart ausgestaltet ist; daß er eine Antenne (7) mit vorgegebener Dimensionierung an den zweiten Wellenleiter (27), z. B. ein Schwallrohr, mit vorgegebener Dimensionierung anpaßt, wobei die Dimensionierung der Antenne (7) kleiner ist als die Dimensionierung des zweiten Wellenleiters (27).

14. Vorrichtung nach Anspruch 11,
wobei zumindest in einem Bereich der Mantelfläche des Adapters (25), der an die Antenne (7) angrenzt, Ausnehmungen (26) vorgesehen sind, die im wesentlichen parallel zur Ausbreitungsrichtung der Wandströme des TE01 - Modes der Meßsignale liegen.

15. Verfahren zur Befestigung einer zumindest einen Innenleiter (22) aufweisenden Einkoppeleinheit (9) auf einer Antenne (7), die für die Bestimmung des Füllstands eines Füllguts (2) in einem Behälter (4) verwendet wird, wobei die Antenne (7) aus zumindest zwei dielektrischen Schichten (12, 13) besteht: einer ersten dielektrischen Schicht (12) mit zumindest einer Aussparung (15) zur Aufnahme der Einkoppeleinheit (9) mit zumindest einem Innenleiter (22), und einer zweiten dielektrischen Schicht (13), die auf der der ersten dielektrischen Schicht (12) zugewandten Seite eine Antennenstruktur (16) trägt und die auf der der ersten dietektrischen Schicht (12) abgewandten Seite eine leitfähige Beschichtung (17) mit Ausnehmungen (18) aufweist,
wobei in die zweite dielektrische Schicht (13) und die leitfähige Beschichtung (17) Sacklochbohrungen (20) eingefügt werden,
wobei Kontaktierungen (19) in die Sacklochbohrungen (20) eingebracht werden, so daß die Einkoppeleinheit (9) mit der leitfähigen Beschichtung (17) kontaktiert wird, und
wobei der Innenleiter (22) mit der Antennenstruktur (16) kontaktiert wird.

16. Verfahren nach Anspruch 15,
wobei es sich bei den Kontaktierungen (19) um Kontaktstifte handelt, die an der Einkoppeleinheit (9) angebracht sind und
wobei die Kontaktstifte (19) mit der leitfähigen Beschichtung (17) und der Innenleiter (22) mit der Antennenstruktur (16) über ein Reflow-Verfahren verbunden werden.

17. Verfahren nach Anspruch 15 oder 16,
wobei die Aussparung (15) in der ersten dielektrischen Schicht (12), in der die Einkoppeleinheit (9) plaziert wird, mit einem dielektrischen Material (28) aufgefüllt wird.

## Claims

1. A device for determining the filling level of a filled substance (2) in a container (4), comprising a signal-generating unit (8) which generates measurement signals, a coupling unit (9) and an aerial (7) with an aerial casing (30), the coupling unit (9) coupling the measurement signals to the aerial (7) and the aerial (7) emitting the measurement signals in the direction of the surface of the filled substance (2), and a receiving / evaluation circuit (10) which receives the measurement signals reflected at the surface (3) of the filled substance (2) and determines the filling level in the container (4) by way of the running time of the measurement signals,
wherein the aerial (7) comprises at least two dielectric layers (12, 13),
wherein the first dielectric layer (12) has at least one recess (15) for receiving the coupling unit (9),
wherein the second dielectric layer (13) supports an aerial structure (16) on the side facing the first dielectric layer (12) and has a conductive coating (17) with apertures (18) on the side remote from the first dielectric layer (12),
wherein contacting means (19), which connect the coupling unit (9) to the conductive coating (17), are provided in the second dielectric layer (13), and
wherein the spatial region defined by the contacting means (19), the conductive coating (17) and the aerial casing (30) forms a Faraday cage.

2. A device according to Claim 1,
wherein the contacting means (19) are arranged in blind bores (20).

3. A device according to Claim 1 or 2,
wherein the blind bores (20) have a conductive inner coating (21).

4. A device according to Claim 1 or 2,
wherein the conductive coating (17) with the apertures (18) is at mass potential.

5. A device according to Claim 1, 2, 3 or 4,
wherein the coupling unit (9) is a high-frequency connector (9a) which comprises a plurality of contact pins (19) and at least one inner conductor (22) situated substantially centrally.

6. A device according to Claim 1 or 2,
wherein the contacting means (19) are arranged in the blind bores (20), and
wherein the coupling unit (9) is connectable to the conductive coating (17) by way of the contacting means (19).

7. A device according to Claim 5 or 6,
wherein the inner conductor (22) is shorter than the contacting means or the contact pins (19) by at least the thickness of the first dielectric layer (12), and
wherein the inner conductor (22) is connectable to the aerial structure (16).

8. A device according to Claim 1, 5, 6 or 7,
wherein the recess (15) in the first dielectric layer (12) in which the coupling unit (9) is situated is filled at least in part with a dielectric material (28).

9. A device according to Claim 1, 7 or 8,
wherein a dielectric protective layer (14) is provided which is connected to the second dielectric layer (13) on the side on which the conductive coating (17) is situated.

10. A device according to Claim 1, 7, 8 or 9,
wherein the dielectric layers (12, 13, 14) are made of Teflon.

11. A device according to Claim 1,
wherein a funnel-shaped adapter (25) is provided which connects the aerial (7) to a second wave guide (27).

12. A device according to Claim 11,
wherein the adapter (25) is made of a conductive material, or
wherein the adapter (25) has at least one inner coating of conductive material, or
wherein the adapter (25) is made of a non-conductive material.

13. A device according to Claim 11 or 12,
wherein the adapter (25) is designed in such a way that it adapts an aerial (7) with pre-determined dimensions to the second wave guide (27), for example a surge tube, with pre-determined dimensions, wherein the dimensions of the aerial (7) are smaller than the dimensions of the second wave guide (27).

14. A device according to Claim 11,
wherein apertures (26), which are orientated approximately parallel to the propagation direction of the wall flows of the TE01 mode of the measurement signals, are provided at least in a region of the outer face of the adapter (25).

15. A method of fastening a coupling unit (9) comprising at least one inner conductor (22) to an aerial (7) which is used to determine the filling level of a filled substance (2) in a container (4), wherein the aerial (7) comprises at least two dielectric layers (12, 13): a first dielectric layer (12) with at least one recess (15) for receiving the coupling unit (9) with at least one inner conductor (22), and a second dielectric layer (13) which supports an aerial structure (16) on the side facing the first dielectric layer (12) and which has a conductive coating (17) with apertures (18) on the side remote from the first dielectric layer (12),
wherein blind bores (20) are formed in the second dielectric layer (13) and the conductive coating (17),
wherein contacting means (19) are formed in the blind bores (20), so that the coupling unit (9) is contacted by the conductive coating (17), and
wherein the inner conductor (22) is contacted by the aerial structure (16).

16. A method according to Claim 15,
wherein the contacting means (19) are contact pins which are attached to the coupling unit (9), and
wherein the contact pins (19) are connected to the conductive coating (17) and the inner conductor (22) is connected to the aerial structure (16) by way of a reflow method.

17. A method according to Claim 15 or 16,
wherein the recess (15) is filled with a dielectric material (28) in the first dielectric layer (12) in which the coupling unit (9) is placed.

## Revendications

1. Dispositif pour la détermination du niveau de remplissage d'un produit de remplissage (2) dans un récipient (4), composé d'une unité de production de signaux (8) qui produit des signaux de mesure, d'une unité d'application (9) et d'une antenne (7) comprenant un boîtier d'antenne (30), l'unité d'application (9) appliquant les signaux de mesure à l'antenne (7) et l'antenne (7) émettant les signaux de mesure en direction de la surface du produit de remplissage (2), et d'un circuit de réception/analyse (10) qui reçoit les signaux de mesure réfléchis sur la surface (3) du produit de remplissage (2) et détermine le niveau de remplissage dans le récipient (4) au moyen du temps de parcours des signaux de mesure,
l'antenne (7) étant composée d'au moins deux couches diélectriques (12, 13), la première couche diélectrique (12) présentant au moins un évidemment (15) pour recevoir l'unité d'application (9),
la deuxième couche diélectrique (13) ponant une structure d'antenne (16) sur le côté dirigé vers la première couche diélectrique (12) et présentant sur le côté qui est éloigné de la première couche diélectrique (12) un revêtement conducteur (17) muni d'évidements (18),
des moyens de mise en contact (19) qui relient l'unité d'application (9) au revêtement conducteur (17) étant prévus dans la deuxième couche diélectrique (13), et
la zone d'espace définie par les moyens de mise en contact (19), le revêtement conducteur (17) et le boîtier d'antenne (30) formant une cage de Faraday.

2. Dispositif selon la revendication 1,
dans lequel les moyens de mise en contact (19) sont disposés dans des perçages borgnes (20).

3. Dispositif selon la revendication 1 ou 2,
dans laquelle les perçages borgnes (20) présentent un revêtement intérieur conducteur (21).

4. Dispositif selon la revendication 1 ou 2.
dans lequel le revêtement conducteur (17) présentant les évidements (18) est au potentiel de la masse.

5. Dispositif selon la revendication 1, 2, 3 ou 4,
dans lequel l'unité d'application (9) est constituée par un connecteur mâle à haute fréquence (9a) qui présente plusieurs broches de contact (19) et au moins un conducteur intérieur (22) disposé sensiblement au milieu.

6. Dispositif selon la revendication 1 ou 2,
dans lequel les moyens de mise en contact (19) sont disposées dans les perçages borgnes (20) et
dans lequel l'unité d'application (9) peut être connectée au revêtement conducteur (17) par l'intermédiaire des moyens de mise en contact (19).

7. Dispositif selon la revendication 5 ou 6,
dans lequel le conducteur intérieur (22) est plus court, d'au moins l'épaisseur de la première couche diélectrique (12), que les moyens de mise en contact ou broches de contact (19), et
dans lequel le conducteur intérieur (22) peut être connecté à la structure d'antenne (16).

8. Dispositif selon la revendication 1, 5, 6 ou 7,
dans lequel l'évidement (15) ménagé dans la première couche diélectrique (12) et dans lequel l'unité d'application (9) est disposée, est rempli au moins partiellement d'une matière diélectrique (28).

9. Dispositif selon la revendication 1, 7 ou 8,
dans lequel il est prévu une couche de protection diélectrique (14) qui est reliée à la deuxième couche diélectrique (13) sur le côté sur lequel le revêtement conducteur (17) est disposé.

10. Dispositif selon la revendication 1, 7, 8 ou 9,
dans lequel les couches diélectriques (12, 13,14) sont fabriquées en Téflon.

11. Dispositif selon la revendication 1,
dans lequel il est prévu un adaptateur (25) en forme d'entonnoir qui relie l'antenne (7) à un deuxième guide d'onde (27).

12. Dispositif selon la revendication 11,
dans lequel l'adaptateur (25) est fabriqué en une matière conductrice ou
dans lequel l'adaptateur (25) présente au moins un revêtement intérieur en matière conductrice ou
dans lequel l'adaptateur (25) est fabriqué en une matière non conductrice.

13. Dispositif selon la revendication 11 ou 12,
dans lequel l'adaptateur (25) est configuré de manière qu'il adapte une antenne (7) d'une dimension prédéterminée au deuxième guide d'onde (27), par exemple un tube d'équilibre de dimension prédéterminée, la dimension de l'antenne (7) étant plus petite que la dimension du deuxième guide d'onde (27).

14. Dispositif selon la revendication 11,
dans lequel, au moins dans une région de la surface latérale de l'adaptateur (25) qui est adjacente à l'antenne (7), sont prévus des évidements (26) qui sont sensiblement parallèles à la direction de propagation des courants de paroi du mode TE01 des signaux de mesure.

15. Procédé pour la fixation d'une unité d'application (9) qui présente au moins un conducteur intérieur (22) sur une antenne (7) qui est utilisée pour la détermination du niveau de remplissage d'un produit de remplissage (2) dans un récipient (4), dans lequel l'antenne (7) est composée d'au moins deux couches diélectriques (12, 13) ; une première couche diélectrique (12) munie d'au moins un évidement (15) pour recevoir l'unité d'application (9) possédant au moins un conducteur intérieur (22), et une deuxième couche diélectrique (13) qui porte une structure d'antenne (16) sur le côté qui est dirigé vers la première couche diélectrique (12), et qui présente sur le côté éloigné de la première couche diélectrique (12), un revêtement conducteur (17) muni d'évidements (18), dans lequel des perçages borgnes (20) sont formés dans la deuxième couche diélectrique (13) et dans le revêtement conducteur (17),
dans lequel des moyens de mise en contact (19) sont placés dans les perçages borgnes (20) de telle sorte que l'unité d'application (9) est mise en contact avec le revêtement conducteur (17) et
dans lequel le conducteur intérieur (22) est mis en contact avec la structure d'antenne (16).

16. Procédé selon la revendication 15,
dans lequel les moyens de mise en contact (19) sont constitués par des broches de contact qui sont fixées à l'unité d'application (9) et
dans lequel les broches de contact (19) sont reliées au revêtement conducteur (17) et le conducteur intérieur (22) est relié à la structure d'antenne (16) par un procédé à reflux.

17. Procédé selon la revendication 15 ou 16,
dans lequel l'évidement (15) de la première couche diélectrique (12), dans lequel l'unité d'application (9) est placée, est rempli d'une matière diélectrique (28).
